# EUROPEAN PATENT SPECIFICATION

(11) **EP 2 547 999 B1**
(45) Date of publication and mention of the grant of the patent: **09.12.2020**
(21) Application number: 11753531.0
(22) Date of filing: 11.03.2011
(51) Int. Cl.: G01N 1/30, G01N 1/28, G01N 33/48

(54) **CLEARING REAGENT FOR BIOLOGICAL MATERIAL, AND USE THEREOF**
KLÄRUNGSREAGENS FÜR EIN BIOLOGISCHES MATERIAL UND VERWENDUNG DAVON
RÉACTIF DE CLARIFICATION POUR SUBSTANCE BIOLOGIQUE, ET UTILISATION ASSOCIÉE

(30) Priority: 12.03.2010 JP 2010056709
(43) Date of publication of application: 23.01.2013
(73) Proprietor: Riken, Wako-shi, Saitama 351-0198 (JP)
(72) Inventor: MIYAWAKI, Atsushi, Wako-shi 351-0198 Saitama (JP); HAMA, Hiroshi, Wako-shi 351-0198 Saitama (JP); KUROKAWA, Hiroshi, Wako-shi 351-0198 Saitama (JP); KAWANO, Hiroyuki, Wako-shi 351-0198 Saitama (JP); SAKAUE, Asako, Wako-shi 351-0198 Saitama (JP)
(74) Representative: Bittner, Thomas L.
(86) International application number: PCT/JP2011/056502
(87) International publication number: WO 2011/111876

(56) References cited:
- EP-A1- 0 246 978
- WO-A1-2007/061783
- JP-A- 2000 509 146
- JP-A- 2003 517 601
- JP-A- 2007 051 957
- JP-A- 2007 051 957
- JP-A- 2008 161 138
- US-A- 4 578 282
- US-A1- 2009 191 138
- TAKANORI SAKAGAMI ET AL.: 'Effects of treatment with urea upon the electron microscopic histochemical reactions of acidic glycoconjugates in fixed tissues.' CONNECT TISSUE vol. 21, no. 2, November 1989, pages 37 - 38, XP008166605
- ATUSHI KYUMA ET AL.: 'Histochemical Studies on Glycoconjugates in the Salivary Gland Connective Tissues of Laboratory Animals' JOURNAL OF NAGOYA CITY UNIVERSITY MEDICAL SCHOOL vol. 42, no. 2, May 1991, pages 183 - 208, XP008166606
- HIROYUKI HONMA: 'A Study of the Vascular Network of Sciatic Nerves in Experimental Chronic Diabetic Rat.' JOURNAL OF ST. MARIANNA UNIVERSITY SCHOOL OF MEDICINE HOSPITAL vol. 27, no. 4, 01 August 1999, pages 339 - 347, XP008166607

## Description

### Technical Field

The present invention relates to a method and a clearing reagent for making a biological material transparent, and use thereof.

### Background Art

For an internal observation of a non-transparent tissue with use of an optical microscope, a pretreatment (a clearing treatment for making a subject transparent) using a clearing reagent is performed.

As typical examples of the clearing reagent and the pretreatment method, there have been known (i) a Focus Clear (product name) solution described by Ann-Shyn Chiang in Patent Literature 1 and Non-Patent Literature 1 and (ii) a tissue clearing method described by Hans-Ulrich Dodt et al. in Non-Patent Literature 2. These are both used to make a tissue transparent for an observation of a fluorescent substance existing in the tissue.

### Citation List

### [Patent Literature]

U.S. Patent No. 6472216 (Date of patent: October 29, 2002) and JP 2007 051957 A (March 1, 2007)

### [Non-Patent Literature]

Non-Patent Literature 1
   Ann-Shyn Chiang et al.: Insect NMDA receptors mediate juvenile hormone biosynthesis. PNAS 99(1), 37-42 (2002).
Non-Patent Literature 2
   Hans-Ulrich Dodt et al.: Ultramicroscopy: three-dimensional visualization of neuronal networks in the whole mouse brain. Nature Methods 4 (4), 331-336 (2007).

### Summary of Invention

### Technical Problem

The Focus Clear solution, which contains dimethyl sulfoxide (DMSO) and/or the like as an active component for making a subject transparent, is difficult to be used on living tissues. Therefore, subjects to which the Focus Clear solution can be applied are limited largely to fixed samples.

In addition, the Focus Clear solution has a quite complicated composition, whereby preparation thereof is complicated, and its cost is very high. Furthermore, although it is suggested that the Focus Clear solution would allow an observation using a fluorescent protein, the Focus Clear solution shrinks nervous tissues and does not sufficiently clear turbidity of nervous tissue at deep area.

Meanwhile, the tissue clearing method of Dodt et al. essentially requires use of a large amount of an organic solvent in a step for making a subject transparent. Therefore, this method is also difficult to be used on living tissues, and subjects to which this method can be applied are limited largely to fixed samples.

Further, as described above, since the tissue clearing method essentially requires use of a large amount of an organic solvent, this method damages almost all fluorescent proteins. As such, with this method, it is difficult to perform a tissue observation using a fluorescent protein.

Moreover, the tissue clearing method described above involves dehydration of a tissue subjected to a clearing treatment, which is due to the nature of their compositions. However, this process causes irreversible shrinkage of the tissue.

The present invention was made in order to solve the foregoing problems, and an object of the present invention is to provide: a novel clearing agent for making a biological material transparent which clearing agent contains, as an active component, a component having a higher bio-affinity; and use thereof.

### Solution to Problem

In order to solve the foregoing problems, the inventors of the present invention made diligent studies to reach a new finding that, among components having excellent bio-affinities, urea has ability to make a biological material transparent. Based on this, the present inventors arrived at the present invention.

Specifically, a clearing reagent for making a biological material transparent according to the present invention includes, as an active component, at least one compound selected from the group consisting of urea and urea derivatives, the clearing reagent being a solution.

The present invention also provides a system for a clearing treatment for making a biological material transparent, including: any of the above clearing reagents; and a biological material which has been isolated, the clearing reagent having permeated into the biological material in order to make the biological material transparent.

A method according to the present invention for making a biological material transparent includes the step of: causing any of the above clearing reagents to permeate into a biological material which has been isolated, in order that the biological material is made transparent.

A method according to the present invention for recovering a biological material having been made transparent by a clearing treatment includes the step of: causing an equilibrium salt solution to permeate into a biological material having been made transparent according to the above method, in order that the biological material is brought back to a state that the biological material had before the clearing treatment.

The present invention also provides a kit for a clearing treatment for making a biological material transparent, including any of the above clearing reagents.

### Advantageous Effects of Invention

The present invention provides: a novel clearing reagent for making a biological material transparent which clearing reagent contains, as an active component, a component having a higher bio-affinity; and use thereof.

### Brief Description of Drawings

Fig. 1

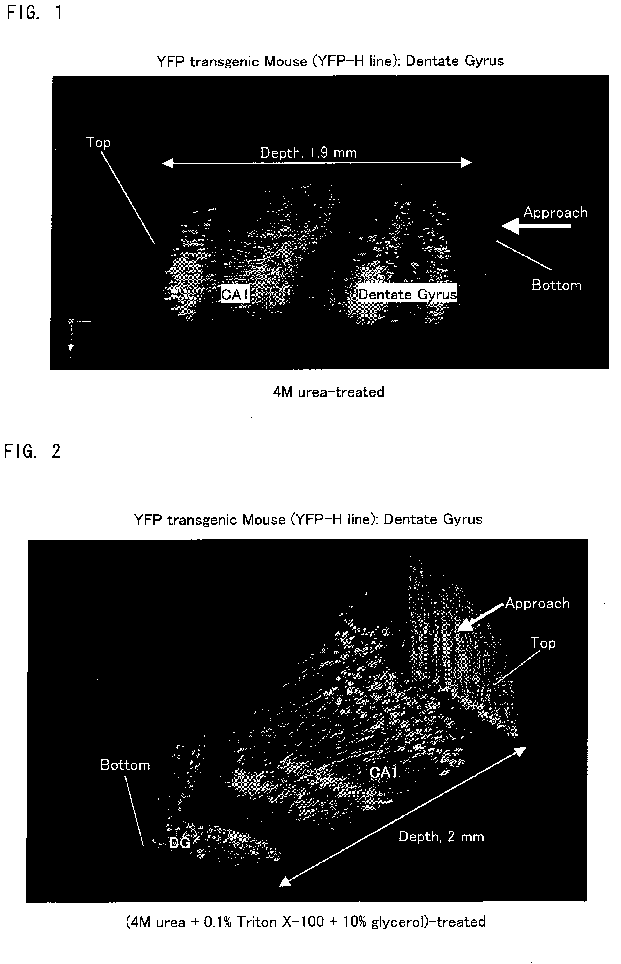

   Fig. 1, related to an example of the present invention, is a view showing a mouse hippocampus treated with a clearing reagent according to the present invention for making a biological material transparent.
Fig. 2
   Fig. 2, related to another example of the present invention, is a view showing a mouse hippocampus treated with a clearing reagent according to the present invention for making a biological material transparent.
Fig. 3

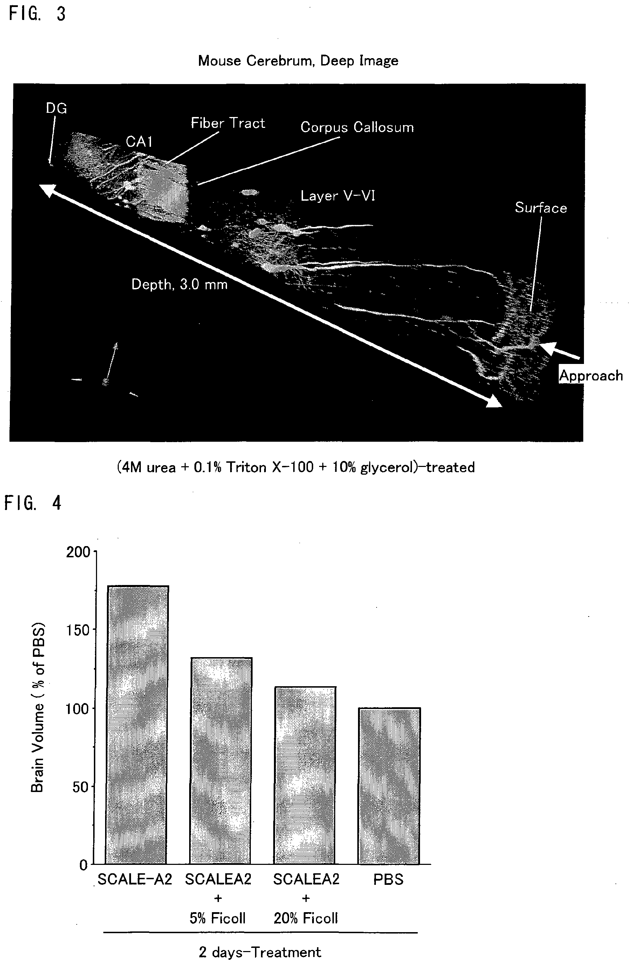

   Fig. 3, related to further another example of the present invention, is a view showing the whole of a mouse cerebrum treated with a clearing reagent according to the present invention for making a biological material transparent.
Fig. 4
   Fig. 4, related to still further another example of the present invention, is a graph illustrating a relationship between (i) a clearing reagent according to the present invention for making a biological material transparent and (ii) swelling of a biological material treated with the clearing reagent.
Fig. 5

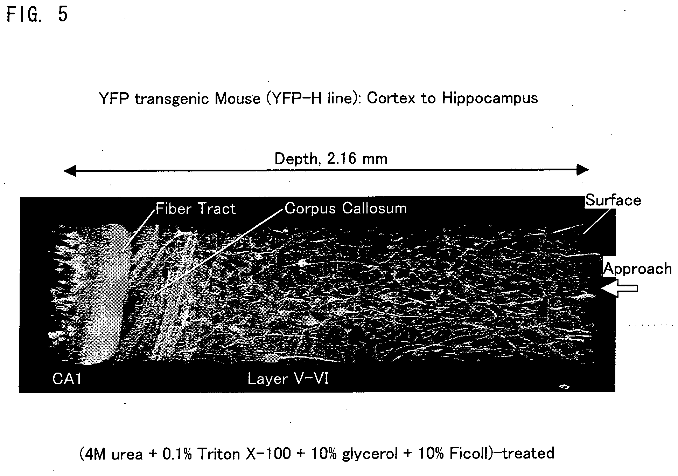

   Fig. 5, related to yet another example of the present invention, is a view showing the whole of a mouse cerebrum treated with a clearing reagent according to the present invention for making a biological material transparent.
Fig. 6

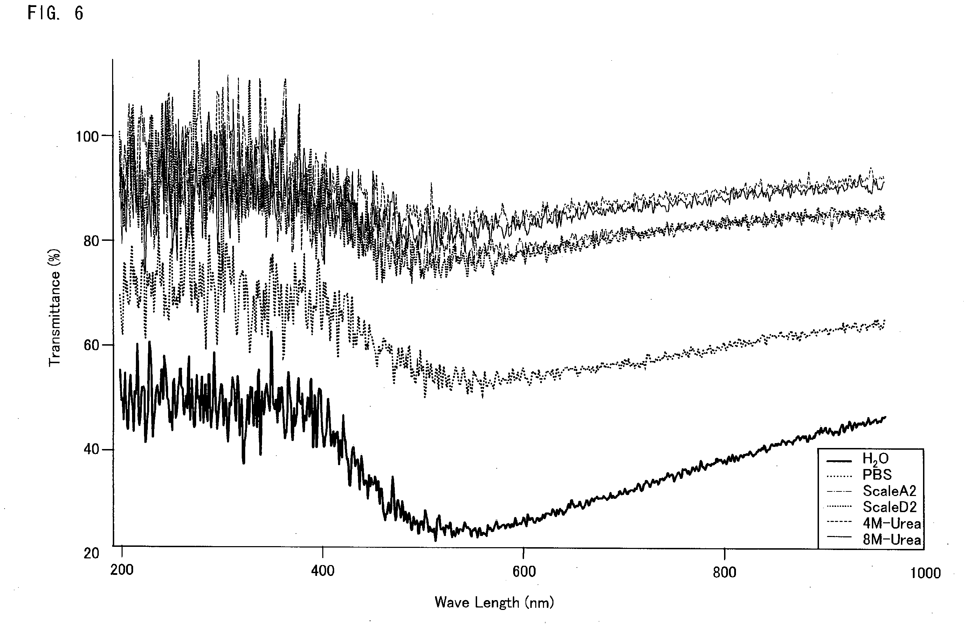

   Fig. 6, related to still yet another example of the present invention, is a graph showing the result of light transmittance measurement of mouse brain slices having been treated with clearing reagents according to the present invention for making a biological material transparent.
Fig. 7

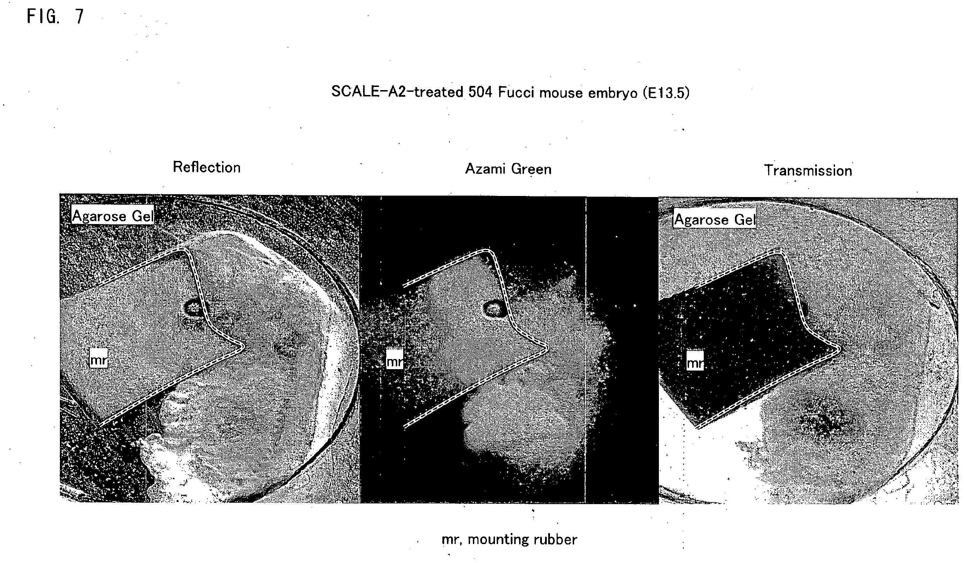

   Fig. 7, related to an additional example of the present invention, is a view showing a mouse fetal treated with a clearing reagent according to the present invention for making a biological material transparent.
Fig. 8

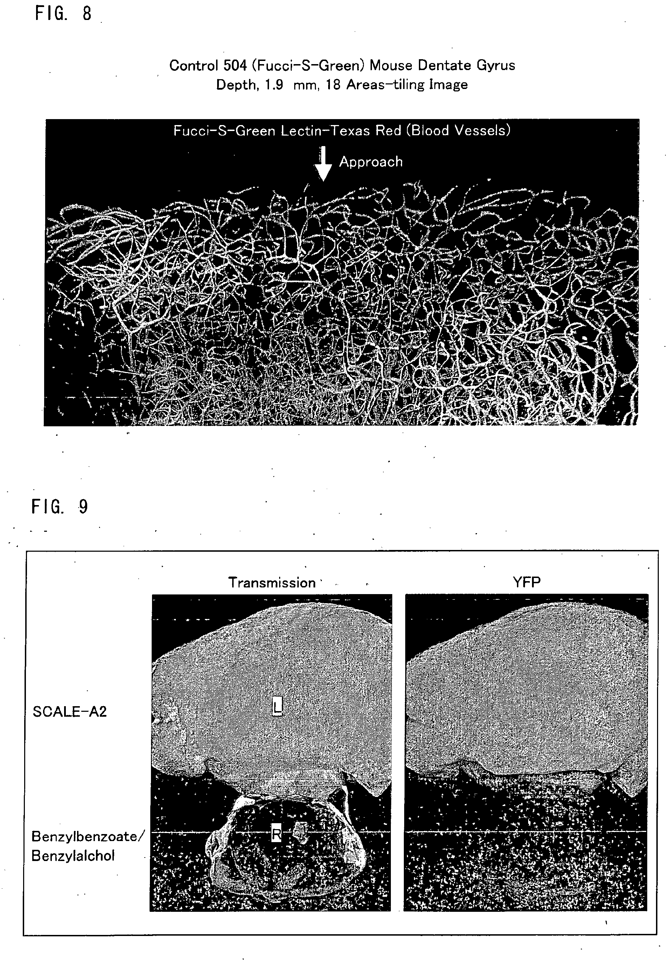

   Fig. 8, related to a further additional example of the present invention, is a view showing the result of an observation of the neural progenitor cells in a mouse hippocampus treated with a clearing reagent according to the present invention for making a biological material transparent.
Fig. 9
   Fig. 9 is a view for comparison between mouse cerebrum samples treated with a clearing reagent according to the present invention for making a biological material transparent, or with a conventional technique (BABB method).
Fig. 10

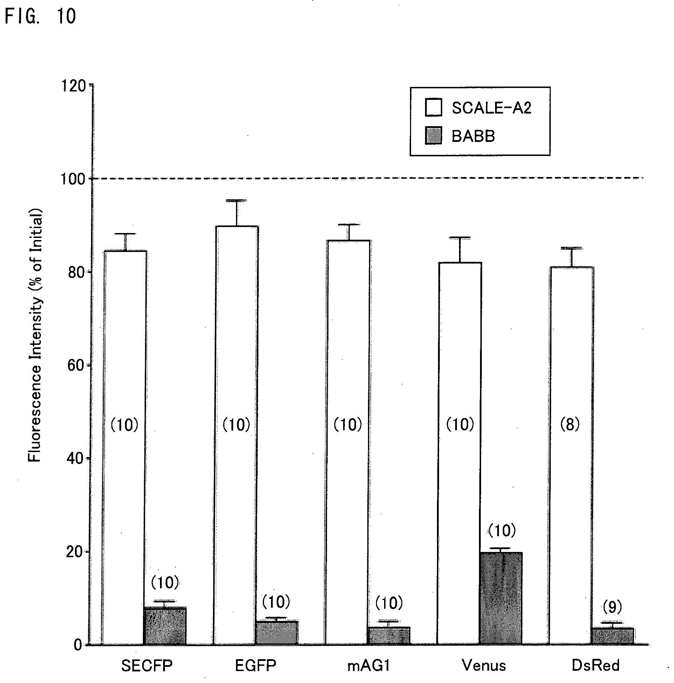

   Fig. 10 is a view for comparison between the results of HeLa cells having various fluorescent proteins expressed therein, the HeLa cells having been treated with a clearing reagent according to the present invention for making a biological material transparent or with a conventional technique (BABB method).
Fig. 11

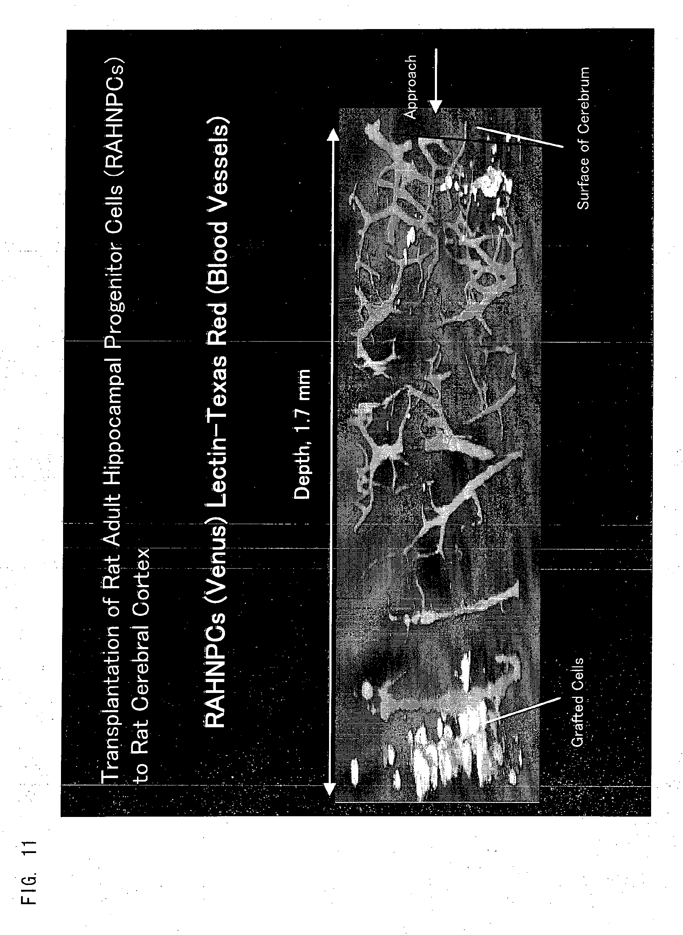

   Fig. 11, related to a still further additional example of the present invention, is a view showing the result of an observation of a cerebral cortex having neural progenitor cells transplanted thereto, which cerebral cortex was treated with a clearing reagent according to the present invention for making a biological material transparent.
Fig. 12

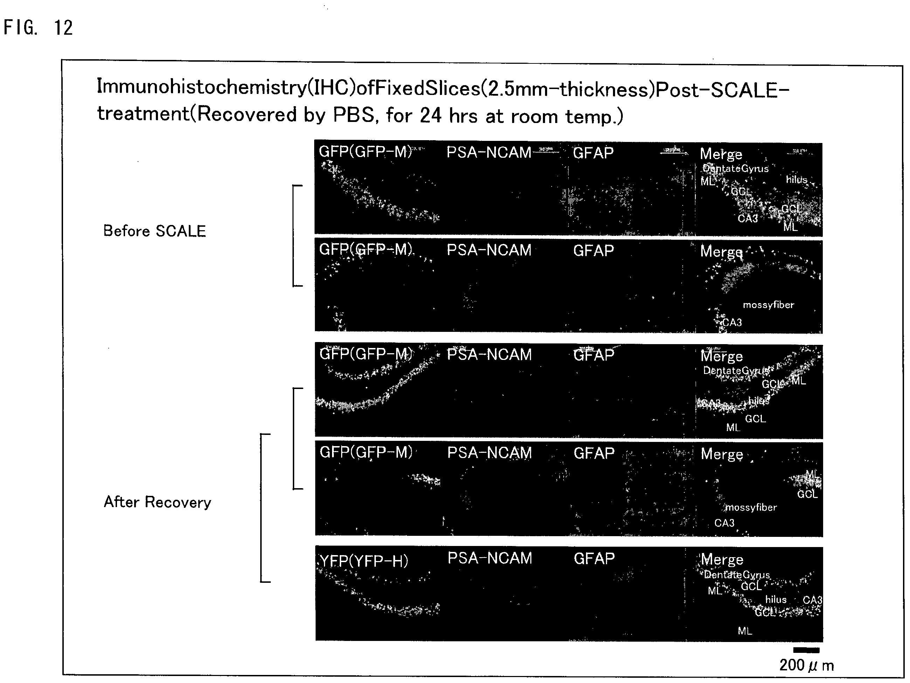

   Fig. 12, related to a yet additional example of the present invention, is a view showing the results of immunostaining on (i) biological materials before a clearing treatment with a clearing reagent according to the present invention for making a biological material transparent and (ii) biological materials which were, after the clearing treatment, brought back to states that they had before the clearing treatment.

### Description of Embodiments

The following will describe an embodiment of the present invention in detail.

### (Active Component of Clearing Reagent for Making Biological Material Transparent)

A "clearing reagent for making a biological material transparent" according to the present invention is a solution containing "urea" as an essential active component for making a biological material transparent.

A "clearing reagent for making a biological material transparent" according to another aspect of the present invention is a solution containing a "urea derivative" as an essential active component for making a biological material transparent.

The urea derivative is not limited to any specific kind. Concretely, for example, the urea derivative is any of various kinds of ureine or compounds expressed by Formula (1) below. Note that the compounds expressed by Formula (1) include part of ureines. The clearing agent for making a biological material transparent according to the present invention only needs to contain, as an active component, at least one compound selected from the group consisting of urea and urea derivatives. Among these, the clearing agent more preferably contains urea.

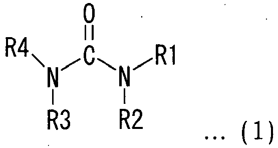

In a urea derivative expressed by Formula (1), each of R1, R2, R3, and R4 is independently a hydrogen atom (note that the one in which all of R1 through R4 are hydrogen atoms is excluded, since it corresponds to urea), a halogen atom, or a hydrocarbon group. Further, in a case where the hydrocarbon group has a plurality of carbon atoms, part of the carbon atoms may be replaced by a hetero atom such as a nitrogen atom, an oxygen atom, or a sulfur atom. Examples of the hydrocarbon group encompass a chain hydrocarbon group and a cyclic hydrocarbon group.

Examples of the chain hydrocarbon group encompass a chain alkyl group, a chain alkenyl group, and a chain alkynyl group. The chain hydrocarbon group may have any number of carbon atoms. For example, the chain hydrocarbon group may be straight-chain or branched one having 6 or less carbon atoms, preferably, an alkyl group having 1 through 3 carbon atoms. The chain hydrocarbon group may have a substituent such as a halogen atom. Examples of the chain alkyl group encompass a methyl group, an ethyl group, a propyl group, an isopropyl group, a butyl group, an iso-butyl group, a sec-butyl group, a tert-butyl group, a hexyl group, and an octyl group.

The cyclic hydrocarbon group may be, for example, a cycloalkyl group or a cycloalkenyl group. The cyclic hydrocarbon group may have a substituent such as a halogen atom. Examples of the cycloalkyl group encompass those having 3 or more and preferably not more than 6 carbon atoms, such as a cyclopropyl group, a cyclobutyl group, a cyclopenthyl group, and a cyclohexyl group. Examples of the cycloalkenyl group encompass those having 3 or more and preferably not more than 6 carbon atoms, such as a cyclohexenyl group.

Examples of the halogen atom encompass a fluorine atom, a chlorine atom, a bromine atom, and an iodine atom.

The following 1) and 2) are more preferable, concrete examples of the urea derivatives expressed by Formula 1:
1) Any three groups selected from R1 through R4 are hydrogen atoms, and the other one group is (i) a halogen atom or (ii) a chain hydrocarbon group having 1 through 6 carbon atoms, more preferably, the other one group is an alkyl group having (i) 1 through 3 carbon atoms or (ii) 1 or 2 carbon atoms.
2) Any two groups selected from R1 through R4 are hydrogen atoms, and each of the other two groups is independently (i) a halogen atom or (ii) a chain hydrocarbon group having 1 through 6 carbon atoms, more preferably, both of the other two groups are alkyl groups each having (i) 1 through 3 carbon atoms or (ii) 1 or 2 carbon atoms. Further more preferably, one of the two groups which are hydrogen atoms is selected from R1 and R2, and the other of the two groups is selected from R3 and R4.

### (Advantages of Use of Urea and/or the Like as Active Component)

Urea is an extremely low toxic substance derived from a living organism. Therefore, a "clearing reagent for making a biological material transparent" according to the present invention has the following advantages: 1) The clearing reagent of the present invention can be used to make transparent not only fixed biological materials but also non-fixed (living) biological materials. 2) Urea has a relatively low possibility of damaging fluorescent proteins and quenching of fluorescence therefrom, and therefore the clearing reagent of the present invention is also applicable to an observation of a biological material with use of a fluorescent protein. 3) Urea is quite low in cost and easily available, and furthermore is easy to handle; therefore, use of the clearing reagent of the present invention allows a clearing treatment to be performed at an extremely low cost and by a simple procedure.

In addition to these advantages, the clearing reagent according to the present invention also has the following advantages: 4) Compared with conventional clearing reagents for making a biological material transparent, the clearing reagent of the present invention can greatly improve transparency of non-transparent biological materials having high light scattering properties, thereby enabling an observation of various fluorescent proteins and fluorescent substances existing in ultra-deep tissues. 5) Particularly, for brain tissues, use of the clearing reagent of the present invention makes it possible to make transparent a white matter layer, which has been a barrier against an observation of a deep portion, thereby enabling an observation of a region (e.g., corpus callosum) located deeper than the white matter layer. 6) A clearing treatment using the clearing reagent of the present invention is reversible. Specifically, merely by immersing in an equilibrium salt solution a biological material having been subjected to the clearing treatment, it is possible to bring the biological material back to a state that the biological material had before the clearing treatment. Further, before and after the clearing treatment, antigenicity of a protein and/or the like is unchanged and maintained. This allows an assay by means of a general tissue staining or immunostaining.

Note that using, instead of urea, the above-described urea derivative can provide the similar effects.

### (Surfactant)

A "clearing reagent for making a biological material transparent" according to the present invention contains nonionic surfactant, since the nonionic surfactant gently facilitates intrusion of the present clearing reagent into a biological tissue. Examples of the nonionic surfactant encompass: fatty acid surfactants such as polyoxyethylene sorbitan monolaurate, polyoxyethylene sorbitan monopalmitate, polyoxyethylene sorbitan monostearate, and polyoxyethylene sorbitan monooleate; higher alcohol surfactants such as polyvinyl alcohol; and alkylphenol surfactants such as polyoxyethylene octylphenyl ether. Specifically, for example, the surfactant may be at least one selected from the group consisting of: Triton X (Registered Trademark) series such as Triton X-100 and Triton X-140; Tween (Registered Trademark) series such as Tween-20, Tween-40, Tween-60, and Tween-80; and NP-40 (product name). As the surfactant, a mixture of two or more kinds may be used, if necessary.

These surfactants can enhance permeability of urea with respect to a biological material, thereby improving efficiency of the clearing treatment. In particular, in a clearing treatment on a biological material (e.g., a white matter layer of brain tissues) on which a clearing treatment is relatively difficult, the clearing reagent preferably contains a surfactant.

Note that, as with the case of urea, above surfactants can enhance permeability of the urea derivative with respect to a biological material.

### (Water-Soluble Macromolecular Compound)

A "clearing reagent for making a biological material transparent" according to the present invention may further contain a water-soluble macromolecular compound, if necessary. Here, the macromolecular compound refers to the one which has a molecular weight of approximately 50,000 to 60,000, for example, and which does not substantially intrude into cells. Further, the macromolecular compound is preferably the one which does not cause denaturation or the like of a biological material. Specific examples of the water-soluble macromolecular compound encompass a crosslinked sucrose macromolecular substance, polyethylene glycol, polyvinyl pyrrolidone, and Percoll (product name; a macromolecular substance obtained by covering colloidal silica with a polyvinyl pyrrolidone film). Specific examples of the crosslinked sucrose macromolecular substance encompass a macromolecular substance which is obtained by crosslinking (copolymerizing) sucrose with epichlorohydrin and which has a weight-average molecular weight of approximately 70,000, such as Ficoll PM70 (product name).

Unlike urea and a urea derivative, these water-soluble macromolecular compounds do not intrude into cells. Furthermore, these water-soluble macromolecular compounds are soluble in water. Therefore, these water-soluble macromolecular compounds are considered to contribute to controlling of an osmotic pressure difference between the inside and outside of a cell. As such, each of these water-soluble macromolecular compounds helps a biological material to be subjected to a clearing treatment maintain its original shape, and particularly contributes to prevention of swelling of the biological material. In a case where the clearing reagent according to the present invention has a relatively high osmotic pressure, the clearing reagent preferably contains any of these water-soluble macromolecular compounds. However, the present invention is not limited to this.

### (Other Components)

A "clearing reagent for making a biological material transparent" according to the present invention can contain a "drying inhibition component", which is at least one compound selected from glycerol, carboxy vinyl polymer, hydroxypropyl methylcellulose, propylene glycol, and macrogol, if necessary. The drying inhibition component prevents drying of a biological material subjected to a clearing treatment. In particular, in a case where the biological material after the cleaning treatment may be kept waited for a long time period before an optical microscopic observation thereof, or in a case where an optical microscopic observation of the biological material is time-consuming, the clearing reagent of the present invention preferably contains any of the above drying inhibition components.

Further, in addition to the above-described "urea and/or a urea derivative", "surfactant", and "water-soluble macromolecular compound", a "clearing reagent for making a biological material transparent" according to the present invention may contain an additive(s) such as a pH adjusting agent and/or an osmotic pressure controlling agent, if necessary.

### (Solvent)

A "clearing reagent for making a biological material transparent" according to the present invention is a solution containing a solvent in which urea is soluble. The solvent is not limited to any specific kind, as long as urea is soluble in the solvent. Preferably, water is used as a main solvent; particularly preferably, only water is used as the solvent. Note that, in the present invention, what is meant by the expression "water is used as a main solvent" is that a volumetric percentage of water to all solvents used is larger than that of any other solvent, and preferably that water is used in an amount which accounts for more than 50% and not more than 100% of a total volume of all solvents used. A "clearing reagent for making a biological material transparent" prepared by using water as a main solvent is referred to as a "clearing reagent for making a biological material transparent" as an aqueous solution.

In the case where water is used as a main solvent, the water may be mixed with dimethyl sulfoxide (DMSO) for application to a fixed sample, for example. It is expected that, for example, use of a mixture of DMSO and water to a fixed sample provides effects such as (i) improvement in permeability of the clearing reagent with respect to a biological material and (ii) facilitation of a clearing treatment with respect to a tissue having a keratin surface.

Main advantages of the use of water as the solvent are as follows: 1) Urea, which is an active component of a "clearing reagent for making a biological material transparent" according to the present invention, is excellent in resolvability in water; therefore, the use of water as the solvent makes it possible to prepare easily and at a low cost the clearing reagent for making a biological material transparent. 2) Compared with a case where an organic solvent is used as a main solvent, the use of water as the solvent does not involve dehydration of a biological material to be subjected to a clearing treatment; therefore, the use of water as the solvent can prevent the problem of shrinkage of a biological material. 3) Compared with a case where an organic solvent is used as a main solvent, the use of water as the solvent significantly reduces the possibility of damaging a fluorescent protein; this makes it possible to observe, with use of a fluorescent protein, a biological material having been subjected to a clearing treatment. 4) The use of water as the solvent makes it possible to apply the clearing reagent of the present invention not only to a clearing treatment on a fixed material but also to a clearing treatment on a living material. 5) The use of water as the solvent makes a clearing treatment reversible (described later), that is, the use of water as the solvent can bring a biological material having been subjected to a clearing treatment back to a state that it had before the clearing treatment, if necessary. 6) Compared with a case where an organic solvent is used as a main solvent, the use of water as the solvent enhances safety in handling of the clearing reagent.

A "clearing reagent for making a biological material transparent" according to the present invention may be a buffer which can maintain a pH suitable for a biological material to be subjected to a clearing treatment. Further, a "clearing reagent for making a biological material transparent" according to the present invention may have an osmotic pressure adjusted to a degree which does not cause deformation of a biological material to be subjected to a clearing treatment and which allows urea to sufficiently penetrate into the biological material.

Note that, as with the case of urea, the above solvent can also be used for the urea derivative.

### (Quantitative Relationship between Components)

The "clearing reagent for making a biological material transparent" according to the present invention is not particularly limited in terms of an amount of "urea" contained therein, as long as the clearing reagent with that amount of urea can proceed the clearing treatment on a biological material. Note that an upper limit of the amount of urea contained in the clearing reagent is determined by the solubility of urea with respect to a solvent to be used. For example, a clearing reagent with a relatively small amount of urea can perform a required treatment by performing the treatment for a long time, while a clearing reagent with a relatively large amount of urea can perform a required treatment by performing the treatment for a short time, although this depends on the type of the biological material to be subjected to the treatment. However, in order to enable a clearing treatment in various degrees, a concentration of urea in a clearing reagent of the present invention is 1M or more and not more than 8.5M, more preferably 3.5M or more and not more than 8.5M, particularly preferably 4M or more and not more than 8M. In the case where the urea derivative (or a mixture of urea and the urea derivative) is used instead of urea, an amount of the urea derivative (or the mixture) in the clearing agent can also be set to the same amount as that of urea.

In the clearing reagent of the present invention the nonionic surfactant is contained at a concentration of 0.05 (w/v)% or more and not more than 0.2(w/v)%. Note that the unit "(w/v)%" represents a percentage of a weight (w (gram)) of a surfactant used, with respect to a volume (v (milliliter)) of the clearing reagent.

In the case where a "water-soluble macromolecular compound" is used in a clearing reagent of the present invention, the clearing reagent is not particularly limited in terms of an amount of water-soluble macromolecular compound contained therein. Preferably, the water-soluble macromolecular compound is contained therein at a concentration of 2.5(w/v)% or more and not more than 40(w/v)%. Further, in view of a balance between a swelling prevention effect for a biological material and a refractive index of the biological material after the clearing treatment, the above concentration is more preferably 5(w/v)% or more and not more than 25(w/v)%, further more preferably 10(w/v)% or more and not more than 20(w/v)%, particularly preferably 10(w/v)% or more and not more than 15(w/v)%. Note that the unit "(w/v)%" represents a percentage of a weight (w (gram)) of the water-soluble macromolecular compound used, with respect to a volume (v (milliliter)) of the clearing reagent.

In the case where a "drying inhibition component" such as glycerol is used in a clearing reagent of the present invention, the clearing reagent is not particularly limited in terms of an amount of the drying inhibition component contained therein. Preferably, the drying inhibition component is contained therein at a concentration of 2.5(w/v)% or more and not more than 20(w/v)%, more preferably 5(w/v)% or more and not more than 15(w/v)%, particularly preferably 8(w/v)% or more and not more than 12(w/v)%. Note that the unit (w/v)% represents a percentage of a weight (w (gram)) of the drying inhibition component used, with respect to a volume (v (milliliter)) of the clearing reagent.

### (Subject Biological Material)

A biological material to be subjected to a clearing treatment using a "clearing reagent for making a biological material transparent" of the present invention is not limited to any specific kind. Preferably, the biological material is a material derived from a plant or an animal, more preferably a material derived from an animal such as the one selected from fish, amphibians, reptiles, birds, and mammals, particularly preferably a material derived from a mammal. The mammal is not limited to any specific kind, examples of which encompass: laboratory animals such as mice, rats, rabbits, guinea pigs, and primates except for humans; pet animals such as dogs and cats; farm animals such as cows and horses; and humans.

Alternatively, the biological material may be an individual itself (except for a living human individual). Further alternatively, the biological material may be an organ, a tissue, or a cell taken from an individual of a multicellular organism. A "clearing reagent for making a biological material transparent" of the present invention has excellent ability to make a subject transparent; therefore, even if the biological material is a tissue or an organ (e.g., the whole of or part of a brain) derived from a multicellular animal or an individual itself (e.g., an embryo) of a multicellular animal which is not a human, the biological material can be subjected to a clearing treatment.

Further, the biological material may be either of (i) a material fixed for a telescopic observation and (ii) a non-fixed material. In a case of using a fixed material, the material is preferably immersed in, e.g., a 20(w/v)% sucrose-PBS solution adequately (e.g., for 24 hours or more) after being subjected to a fixing process. Furthermore, preferably, this material is embedded into an OCT compound and frozen by liquid nitrogen, thawed in PBS, and then fixed again by a 4(w/v)% PFA-PBS solution.

Specific examples of the biological material encompass: a biological tissue having a fluorescent chemical substance injected thereto; a biological tissue stained with a fluorescent chemical substance; a biological tissue having a fluorescent protein-expressed cell transplanted thereto; and a biological tissue taken from a genetically-modified animal in which a fluorescent protein is expressed.

### (Examples of Particularly Preferable Composition of Clearing Reagent for Biological Material)

The following will describe examples of a particularly preferable composition of a "clearing reagent for making a biological material transparent" according to the present invention. The following clearing reagents are quite suitable for a clearing treatment particularly on the whole of or part (e.g., the hippocampus or the whole or part of the cerebrum) of the brain or an embryo of a mammal such as a mouse. Note that clearing reagents for making a biological material transparent used in Examples 1 to 9 (described later) also satisfied the following conditions of the below-described clearing reagents (1) to (4):
- Clearing reagent (1) for making a biological material transparent:
   An aqueous solution obtained by dissolving urea in water at a concentration of 4M or more and not more than 8M.
- Clearing reagent (2) for making a biological material transparent:
   An aqueous solution obtained by dissolving, in water, (i) urea at a concentration of 4M or more and not more than 8M, (ii) a nonionic surfactant (e.g., Triton X-100) at a concentration of 0.05(w/v)% or more and not more than 0.2(w/v)%, and (iii) a drying inhibition component (e.g., glycerol) at a concentration of 8(w/v)% or more and not more than 12(w/v)%.
- Clearing reagent (3) for making a biological material transparent:
   An aqueous solution obtained by dissolving, in water, (i) urea at a concentration of 4M or more and not more than 8M, (ii) a nonionic surfactant (e.g., Triton X-100) at a concentration of 0.05(w/v)% or more and not more than 0.2(w/v)%, (iii) a drying inhibition component (e.g., glycerol) at a concentration of 8(w/v)% or more and not more than 12(w/v)%, and (iv) a water-soluble macromolecular compound (e.g., Ficoll) at a concentration of 5(w/v)% or more and not more than 25(w/v)%.
- Clearing reagent (4) for making a biological material transparent:
   An aqueous solution obtained by dissolving, in water, (i) urea at a concentration of 4M or more and not more than 8M, (ii) a nonionic surfactant (e.g., Triton X-100) at a concentration of 0.05(w/v)% or more and not more than 0.2(w/v)%, and (iii) dimethyl sulfoxide (DMSO) at a concentration of 8(w/v)% or more and not more than 12(w/v)%.

In the case where the urea derivative (or a mixture of urea and the urea derivative) is used instead of urea, the clearing reagents (1) through (4) may be prepared with the urea derivative (or the mixture) at the same concentration as the above-described concentration of urea.

### (Preparation of Clearing Reagent for Making Biological Material Transparent)

A method for preparing a "clearing reagent for making a biological material transparent" according to the present invention includes dissolving, in a solvent, (i) "urea and/or a urea derivative" and (ii) a "surfactant", a "water-soluble macromolecular compound", a "drying inhibition component", and/or the like, each of which is used if necessary. A procedure for dissolving or mixing the component(s) in the solvent is not particularly limited.

### (Example of Method for Clearing Treatment Using Clearing Reagent for Making Biological Material Transparent)

A method for a clearing treatment on a biological material with use of a "clearing reagent for making a biological material transparent" according to the present invention includes a step (clearing treatment step) for causing the clearing reagent to permeate into the biological material. More specifically, this step causes the clearing reagent to permeate into the biological material in a container for a clearing treatment.

In the clearing treatment step, whether the clearing reagent or the biological material is stored in the container for the clearing treatment first is not particularly limited. Preferably, the clearing reagent is stored in the container first, and subsequently the biological material is stored therein (i.e., the biological material is put into the clearing reagent).

A processing temperature at which the above clearing treatment step is performed is not particularly limited; preferably, the processing temperature is within a range of 15°C or more and not more than 45°C. A processing time for which the clearing treatment is performed is not particularly limited; preferably, the processing time is within a range of two hours or more and not more than six months, more preferably 12 hours or more and not more than seven days. A pressure at which the clearing treatment is performed is not particularly limited.

The container for the clearing treatment which is used in the above clearing treatment step and in which the biological material having been subjected to the clearing treatment is stored may be preserved, e.g., at room temperature or in a low-temperature environment until the container is used in the below-described observation step. (A step for preserving a sample after a clearing treatment)

### (Step for Observation of Biological Material Having Been Subjected to Clearing Treatment)

On the biological material having been subjected to the clearing treatment, an observation step by, e.g., an optical microscope is subsequently performed. On the biological material to be subjected to the observation step, a visualizing treatment step (e.g., staining or marking) may be performed (i) before the clearing treatment step or (ii) after the clearing treatment step but before the observation step, if necessary.

For example, in a case where the visualizing treatment step involves use of a fluorescent protein, a fluorescent protein gene is transferred into a living biological material before the clearing treatment step so that the fluorescent protein will be expressed therein.

In a case where the visualizing treatment step is (i) injection of a fluorescent chemical substance (which is not a fluorescent protein) into a biological material or (ii) staining of a biological material with a fluorescent chemical substance, the visualizing treatment step is preferably performed before the clearing treatment step. However, such the visualizing treatment step may be performed after the clearing treatment step. Alternatively, the visualizing treatment step may be staining of a biological material with a chemical substance which is not a fluorescent chemical substance.

The observation step can be performed with use of any type of optical microscope. For example, the observation step can be performed by employing a three-dimensional super-resolution microscopy technique (e.g., STED, 3D PALM, FPALM, 3D STORM, or SIM). Preferably, the observation step is performed by employing a multi-photon excitation type (generally, two-photon excitation type) optical microscopy technique.

### (Other Applications)

A clearing treatment using a "clearing reagent for making a biological material transparent" according to the present invention is reversible. As such, a biological material having been subjected to the clearing treatment can be brought back to a state that it had before the clearing treatment, e.g., by immersing the biological material in an equilibrium salt solution so as to remove therefrom the components of the clearing reagent. Here, specific examples of the equilibrium salt solution encompass: equilibrium salt solutions (e.g., PBS and HBSS) which are buffered by phosphate; an equilibrium salt solution (TBS) which is buffered by tris hydrochloride; an artificial cerebrospinal fluid (ACSF); and basal media for cell culturing, such as MEM, DMEM, and Ham's F-12.

The use of the clearing reagent does not cause denaturation or the like of a protein, etc. in the biological material, before and after the clearing treatment, or in a case where, after the clearing treatment, the biological material is brought back to a state that it had before the clearing treatment. Accordingly, antigenicity of the protein, etc. in the biological material is preserved as unchanged. As such, for example, after a biological material is subjected to a clearing treatment and an optical microscopic observation, the biological material can be brought back to a state that it had before the clearing treatment, so as to undergo, e.g., a detailed assay by means of generally-used tissue staining or immunostaining.

### (Kit for Clearing Treatment for Making Biological Material Transparent)

A "kit for a clearing treatment for making a biological material transparent" according to the present invention includes the above-described "clearing reagent for making a biological material transparent". The "kit for a clearing treatment for making a biological material transparent" may further include at least one selected from: a "container for a clearing treatment" used in the clearing treatment step; a "biological material holding tool (e.g., tweezers)"; an "equilibrium salt solution" for bringing a biological material having been subjected to a clearing treatment back to a state that it had before the clearing treatment; and an "instruction manual for the kit".

### (System for Clearing Treatment for Making Biological Material Transparent)

A system for a clearing treatment for making a biological material transparent according to the present invention includes: a "clearing reagent for making a biological material transparent" according to the present invention; and the above-described "biological material" which has been isolated. Further, in this system, the clearing reagent has permeated into the biological material so as to make the biological material transparent. That is, a concept of this system for a clearing treatment encompasses, e.g., (i) a treatment system including a biological material which is in a midterm stage of a clearing treatment or (ii) a treatment system including a biological material on which a clearing treatment has been completed.

### (Various Embodiments of the Present Invention)

As described above, a clearing reagent for making a biological material transparent according to the present invention includes, as an active component, at least one compound selected from the group consisting of urea and urea derivatives, the clearing reagent being a solution.

In the clearing reagent for making a biological material transparent according to the present invention, having the above arrangement, urea is more preferably contained as the active component.

The clearing reagent for making a biological material transparent according to the present invention, having the above arrangement, is more preferably an aqueous solution.

The clearing reagent for making a biological material transparent according to the present invention, having the above arrangement, more preferably includes a surfactant.

In the clearing reagent for making a biological material transparent according to the present invention, having the above arrangement, the surfactant is more preferably a nonionic surfactant.

In the clearing reagent for making a biological material transparent according to the present invention, having the above arrangement, the nonionic surfactant is more preferably at least one selected from the group consisting of Triton X (Registered Trademark), Tween (Registered Trademark), and NP-40 (product name).

The clearing reagent for making a biological material transparent according to the present invention, having the above arrangement, more preferably includes a water-soluble macromolecular compound.

In the clearing reagent for making a biological material transparent according to the present invention, having the above arrangement, the water-soluble macromolecular compound is more preferably at least one selected from the group consisting of Percoll (Registered Trademark), Ficoll (Registered Trademark), polyethylene glycol, and polyvinyl pyrrolidone.

In the clearing reagent for making a biological material transparent according to the present invention, having the above arrangement, the urea is more preferably contained at a concentration of 1M or more and not more than 8.5M, the surfactant is more preferably contained at a concentration of 0.025(w/v)% or more and not more than 5(w/v)%, and the water-soluble macromolecular compound is more preferably contained at a concentration of 2.5(w/v)% or more and not more than 40(w/v)%.

The clearing reagent for making a biological material transparent according to the present invention more preferably further includes at least one selected from the group consisting of glycerol, carboxy vinyl polymer, hydroxypropyl methylcellulose, propylene glycol, and macrogol.

The clearing reagent for making a biological material transparent according to the present invention preferably makes transparent (i) a tissue or an organ derived from a multicellular animal or (ii) a multicellular animal which is not a human.

The present invention also provides a system for a clearing treatment for making a biological material transparent, including: any of the above clearing reagents; and a biological material which has been isolated, the clearing reagent having permeated into the biological material in order to make the biological material transparent.

A method according to the present invention for making a biological material transparent includes the step of: causing any of the above clearing reagents to permeate into a biological material which has been isolated, in order that the biological material is made transparent.

A method according to the present invention for recovering a biological material having been made transparent by a clearing treatment includes the step of: causing an equilibrium salt solution to permeate into a biological material having been made transparent according to the above method, in order that the biological material is brought back to a state that the biological material had before the clearing treatment.

The present invention also provides a kit for a clearing treatment for making a biological material transparent, including any of the above clearing reagents.

### [Examples]

The following will further specifically describe the present invention with reference to Examples, Comparative Examples, etc. below. However, the present invention is not limited to these.

### [Example 1: Observation of Hippocampus]

### (Step for Perfusion Fixation)

A transgenic mouse having a fluorescent protein YFP expressed in its neurons of the nervous system (YFP-H line: provided by Professor Josh Sanes of Harvard University, U.S.A. [reference] Feng et al. Neuron, 28: 41-51, 2000) of 7 to 8 week-old after birth was used. A peristaltic pump was used to perfuse an ice-cold PBS from the left cardiac ventricle of the mouse, and then to perfuse an ice-cold fixing solution (4% paraformaldehyde-PBS, pH 7.4), so that the mouse was systemically fixed.

### (Step for Taking-Out and Fixing of Biological Material)

Subsequently, the cranial bones were removed from the mouse, and the hippocampus was carefully taken out therefrom. Then, the hippocampus taken out was immersed in an ice-cold fixing solution (4% paraformaldehyde-PBS, pH 7.4) for one night at 4°C. Thereafter, the hippocampus was transferred into a 20% sucrose-PBS solution, and was then gently shaken for 24 hours at 4°C.

Next, after the hippocampal tissue was completely replaced by the 20% sucrose-PBS solution, the hippocampus was embedded into an OCT compound, and was then frozen by liquid nitrogen. Then, the frozen hippocampus was put into PBS, and was thawed at room temperature. The hippocampus thawed was refixed in a 4% paraformaldehyde-PBS for an hour.

### (Step for Clearing Treatment and Observation of Biological Material)

Lastly, the refixed hippocampus was immersed in a clearing reagent according to the present example for making a biological material transparent and was shaken at room temperature for three days. The clearing reagent was an aqueous solution prepared by dissolving 4M urea in pure water. At the point when the clearing treatment had progressed (three days after the start of the treatment), the hippocampus was embedded in agarose gel (concentration: 0.5%(w/v) or less), and was observed from its bottom side to top surface side with use of an upright two-photon microscope (product name: FV1000MPE, manufactured by Olympus Corporation) provided with a laser having a wavelength of 920 nm. Note that an objective lens used in the observation had a working distance of 2 mm.

The result of the observation is shown in Fig. 1. As shown in Fig. 1, performing the clearing treatment with use of the clearing reagent according to the present example could allow a clear observation of a range of approximately 1.9 mm in depth (corresponding to the thickness of the biological material), the range covering the dentate gyrus (DG), the CA1, and the top surface of the hippocampus.

### [Example 2: Observation of Hippocampus and Study of Reagent]

A mouse hippocampus was observed according to the same method as that of Example 1, except that (i) Example 2 used, as the clearing reagent used in the "Step for Clearing Treatment for Making Biological Material Transparent", an aqueous solution (referred to as a SCALE-A2 reagent) prepared by dissolving, in pure water, 4M urea, 0.1%(w/v) Triton X-100, and 10%(w/v) glycerol and (ii) Example 2 performed an observation from the top surface side to the bottom side of the hippocampus.

The result of the observation is shown in Fig. 2. As shown in Fig. 2, the clearing treatment with use of the clearing reagent according to the present example could allow a clear observation of a range of approximately 2 mm in depth (corresponding to the thickness of the biological material), the range covering the top surface, the CA1, the dentate gyrus (DG), and the bottom of the hippocampus.

### [Example 3: Observation of Cerebrum]

A mouse cerebrum was observed according to the same method as that of Example 1, except for the following points 1) to 3):
1) In the "Step for Taking-Out and Fixing of Biological Material" of Example 3, the whole of the cerebrum was taken out and fixed, and the cerebrum fixed was used as a biological material.
2) In the "Step for Clearing Treatment and Observation of Biological Material" of Example 3, a SCALE-A2 reagent identical to the one used in Example 2 was used as a clearing reagent for making a biological material transparent.
3) In the "Step for Clearing Treatment and Observation of Biological Material" of Example 3, an objective lens having a working distance of 3 mm was used to perform an observation from the cerebrum top surface (cerebral cortex) side to the hippocampus side.

The result of the observation is shown in Fig. 3. As shown in Fig. 3, performing the clearing treatment with use of the clearing reagent according to the present example could allow a clear observation of a range of approximately 3 mm in depth (a working limit of the objective lens), the range covering, of course, the cerebral cortex and the layer V-VI, and further covering the white matter region (corpus callosum) below the cerebral cortex, the fiber tract of the hippocampus, and even a cell group constituting the CA1 of, the dentate gyrus (DG), etc.

Note that conventional clearing reagents could not make transparent the white matter region below the cerebral cortex, and therefore did not allow an observation of a range deeper than the white matter region.

### [Example 4: Study of Reagent]

According to the conditions below, the following items were evaluated: (i) a degree to which a SCALE-A2 reagent swells a biological material; and (ii) an effect of swelling prevention measure using Ficoll together with a SCALE-A2 reagent.
1) First, a mouse cerebrum was subjected to a clearing treatment with use of a SCALE-A2 reagent, according to the same method as that described in Example 3 except that the clearing treatment was carried out for two days. Then, a volume of the cerebrum having been subjected to the clearing treatment was measured. Note that, the two-day clearing treatment was sufficient to make the mouse cerebrum transparent to a degree allowing an observation.
2) Mouse cerebra were subjected to a clearing treatment in the same manner as in 1), except that SCALE-A2 reagents respectively having 5%(w/v) Ficoll and 20%(w/v) Ficoll added thereto were used as a clearing reagent. Then, respective volumes of the cerebra having been subjected to the clearing treatment were measured.
3) As a control, a mouse cerebrum was immersed in PBS, and a volume thereof was measured immediately after the immersion (0 day after the immersion).

The result of the observation is shown in Fig. 4. Fig. 4 shows that, in comparison with the control (indicated as "PBS" in Fig. 4), the cerebrum (indicated as "SCALE-A2" in Fig. 4) having been subjected to the above treatment 1) swelled. Meanwhile, swelling of the cerebrum having been subjected to the above treatment 2) was reduced according to the amounts of Ficoll added. In particular, the use of the clearing reagent having 20%(w/v) Ficoll added thereto reduced the swelling by 85% or more (indicated as "SCALE-A2 + 20% Ficoll" in Fig. 4).

The cerebrum which has not swelled or retracted is particularly preferable; however, the cerebrum which has swelled or retracted can also be observable as a sample by an optical microscope.

### [Example 5]

A mouse cerebrum was observed according to the same method as that of Example 1 except for the following points 1) and 2):
1) In the "Step for Clearing Treatment and Observation of Biological Material" of Example 5, a clearing reagent for making a biological material transparent was an aqueous solution prepared by dissolving, in pure water, 4M urea, 0.1%(w/v) Triton X-100, 10%(w/v) glycerol, and 10%(w/v) Ficoll, and a clearing treatment was performed for three days.
2) In the "Step for Clearing Treatment and Observation of Biological Material" of Example 5, an objective lens having a working distance of 2 mm was used to perform an observation from the cerebrum top surface (cerebral cortex) side to the hippocampus side.

The result of the observation is shown in Fig. 5. As shown in Fig. 5, the clearing treatment with use of the clearing reagent according to the present example could allow a clear observation of a range of approximately 2.16 mm in depth (a working limit of the objective lens), the range covering, of course, the cerebral cortex and the layer V-VI, and further covering the white matter region (corpus callosum) below the cerebral cortex, the fiber tract of the hippocampus, and even a cell group constituting the CA1, etc.

Note that conventional clearing reagents could not make transparent the white matter region below the cerebral cortex, and therefore did not allow an observation of a range deeper than the white matter region.

### [Example 6: Evaluation of Light Transmittance]

Mouse brain slices (thickness: 60 micrometer) were treated for one day with (i) water, (ii) PBS, (iii) an 8M urea aqueous solution (clearing reagent), (iv) a 4M urea aqueous solution (clearing reagent), (v) a clearing reagent SCALE-A2 (an aqueous solution containing 4M urea, 0.1%(w/v) Triton X-100, and 10%(w/v) glycerol), and (vi) a clearing reagent SCALE-D2 (an aqueous solution containing 4M urea + 0.1%(w/v) Triton X-100 and 10%(w/v) DMSO), respectively. Then, a transmittance of a cerebral cortex portion of each mouse brain slice with respect to light having a wavelength of 200 nm to 1000 nm was measured. Note that a light wavelength band from 200 nm to 1000 nm covers both of (i) an excitation wavelength range commonly used in a two-photon microscopic observation and (ii) a range of a main fluorescence wavelength of a fluorescent protein to be observed.

Note that the light transmittance measurement was performed with use of multichannel detector PMA-2 (Hamamatsu Photonics K.K.). The result of the measurement is shown in Fig. 6. As shown in Fig. 6, light transmittances of the samples respectively treated with the 8M urea aqueous solution, the 4M urea aqueous solution, the clearing reagent SCALE-A2, and the clearing reagent SCALE-D2 were each 80% or more. That is, these samples exhibited outstanding effects of the clearing treatment, unlike the samples treated with water or PBS.

### [Example 7: Clearing Treatment for Making Mouse Fetus Transparent]

A Fucci-S-Green (Fucci-S/G₂/M)-expressed transgenic mouse fetus at 13.5 days of fetal life (obtained by breeding of mice produced by Laboratory for Cell Function Dynamics, Brain Science Institute, RIKEN [reference: Sakaue-Sawano et al., Cell, 132(3): 487-98, 2008.]) was fixed with 4(w/v)% PFA-PBS for two days, and was then immersed in a 20(w/v)% sucrose-PBS solution. Thereafter, the fetus was frozen once, and was then thawed. After that, the fetus was fixed again with 4(w/v)% PFA-PBS for an hour. Subsequently, the fetus was immersed in SCALE-A2 described in Example 2 for seven days for a clearing treatment.

Next, the fetus was embedded in agarose gel (concentration: 0.5%(w/v) or less), and was observed with use of a fluorescent stereomicroscope (product name: MZ10F, manufactured by Leica Microsystems). Note that an objective lens used in the observation had a working distance of 70 mm.

The result of the observation is shown in Fig. 7. As shown in Fig. 7, by performing the clearing treatment with use of the clearing reagent according to the present example, the whole body of the mouse fetus was made transparent outstandingly, although only the liver thereof had a small yellow portion left. Note that the mounting rubber (mr) shown in Fig. 7 was used to support the head of the mouse fetus.

### [Example 8: Observation of Neural Progenitor Cells in Mouse Hippocampus]

### (Step for Perfusion Fixation)

A Fucci-S-Green (Fucci-S/G₂/M)-expressed transgenic mouse of six week-old after birth (obtained by breeding of mice produced by Laboratory for Cell Function Dynamics, Brain Science Institute, RIKEN [reference] Sakaue-Sawano et al., Cell, 132(3): 487-98, 2008.) was used. A peristaltic pump was used to perfuse an ice-cold PBS from the left cardiac ventricle of the mouse, and then to perfuse an ice-cold fixing solution (4% paraformaldehyde-PBS, pH 7.4), so that the mouse was fixed systemically.

### (Step for Taking-Out and Fixing of Biological Material)

Subsequently, the cranial bone was removed from the mouse, and the dentate gyrus of hippocampus was carefully taken out therefrom. Then, the dentate gyrus of hippocampus taken out was immersed in an ice-cold fixing solution (4% paraformaldehyde-PBS, pH 7.4) for one night at 4°C. Thereafter, the dentate gyrus of hippocampus was transferred into a 20% sucrose-PBS solution, and was then gently shaken for 24 hours at 4°C.

Next, after the dentate gyrus of hippocampus was completely replaced by the 20% sucrose-PBS solution, the dentate gyrus of hippocampus was embedded into an OCT compound, and was then frozen by liquid nitrogen. Then, the dentate gyrus of hippocampus frozen was put into PBS, and was thawed at room temperature. The dentate gyrus of hippocampus unfrozen was refixed in a 4% paraformaldehyde-PBS for an hour.

Note that the blood vessels of the dentate gyrus used in the present example were stained with Lectin-Texas Red conjugate.

### (Step for Clearing Treatment and Observation of Biological Material)

Lastly, the dentate gyrus of hippocampus refixed was immersed for three days in a clearing reagent according to the present example for making a biological material transparent, and was shaken at room temperature. The clearing reagent was an aqueous solution prepared by dissolving, in pure water, 4M urea, 0.1%(w/v) Triton X-100, and 10%(w/v) glycerol. At the point when the clearing treatment had progressed (three days after the start of the treatment), the dentate gyrus of hippocampus was embedded in agarose gel (concentration: 0.5%(w/v) or less), and was observed with use of an upright two-photon microscope (product name: FV1000MPE, manufactured by Olympus Corporation) provided with a laser having a wavelength of 920 nm. Note that an objective lens used in the observation had a working distance of 2 mm. The observation was performed on 18 consecutive visual fields, from the ventral side of the hippocampus to 1.7 mm-depth. Then, the results of the observation were combined into an integrated image.

The result of the observation is shown in Fig. 8. As shown in Fig. 8, it was confirmed that the clearing treatment with use of the clearing reagent according to the present example allowed to observe that Fucci-S-Green (Fucci-S/G₂/M)-positive neural progenitor cells existed around the blood vessels.

### [Example 9: Observation Regarding Transplantation of Neural Progenitor Cells]

Neural progenitor cells derived from the hippocampus of a fluorescent protein Venus-expressed adult rat were obtained. Then, the neural progenitor cells obtained were transplanted into a cerebral cortex portion (in the vicinity of the layer V, approximately 1.7 mm in depth) of a Fischer F344-strain rat (purchased from Japan SLC, Inc.).

Three days after the transplantation of the neural progenitor cells, the Fischer F344-strain rat was fixed according to the method described in the (Step for Perfusion Fixation) of Example 8. Subsequently, according to the method described in the (Step for Taking-Out and Fixing of Biological Material) of Example 8, the cerebral cortex of the Fischer F344-strain rat was fixed. Note that the blood vessels of the rat cerebral cortex used in the present example were stained with Lectin-Texas Red conjugate.

Subsequently, according to the method described in the (Step for Clearing Treatment and Observation of Biological Material) of Example 8, the cerebral cortex was observed. The result of the observation is shown in Fig. 11. As shown in Fig. 11, performing the clearing treatment with use of the clearing reagent according to the present example allowed to observe that fluorescence protein Venus-expressed neural progenitor cells had gathered in the vicinity of the blood vessels (stained with Lectin Texas-Red conjugate). Thus, the present method is suitable for an observation of movement of cells after transplantation, changes in the morphology, and the like.

### [Comparative Example 1: Comparison with BABB Method (1)]

Transgenic mice each having a fluorescent protein YFP expressed in its nervous system (YFP-H line: provided by Professor Josh Sanes of Harvard University, U.S.A. [reference] Feng et al. Neuron, 28: 41-51, 2000) of 12 week-old after birth were used. From the mice, the cerebra were taken out. Then, a clearing treatment using a SCALE-A2 reagent (the present invention: see Example 2) was compared with a clearing treatment according to a benzylbenzoate/benzylalchol (BABB) method described by Dodt et al. in Non-Patent Literature 2.

Each of the clearing treatments was performed in such a manner that the cerebrum was immersed in the clearing treatment solution for two days. The clearing treatment solution used in the BABB method was composed of benzylalchol and benzylbenzoate (composition ratio therebetween = 1:2).

The results are shown in Fig. 9. In Fig. 9, upper portions of the respective columns indicated as "Transmission" and "YFP" show the results of the treatment using the SCALE-A2 reagent, whereas lower portions thereof show the results of the treatment according to the BABB method. Note that the column "Transmission" shows the result of the observation with use of a transmission microscope, whereas the column "YFP" shows the result of the observation of fluorescence from YFP with use of a fluorescence microscope.

As shown in Fig. 9, with the clearing treatment using the SCALE-A2 reagent, it was possible to clearly observe fluorescence emitted by YFP. On the other hand, with the clearing treatment according to the BABB method, the cerebrum was crucially shrunk, and fluorescence from YFP decayed significantly.

### [Comparative Example 2: Comparison with BABB Method (2)]

Genes encoding various fluorescent proteins were respectively transferred into HeLa cells (provided by The Institute of Medical Science, The University of Tokyo; Scherer et al., J. Exp. Med. 97(5):695-710, 1953) so that the corresponding fluorescent proteins were expressed therein. The fluorescent proteins expressed were SECFP, EGFP, mAG1, Venus, and DsRed (license of use of EGFP and DsRed was obtained from Clontech Laboratories, Inc.; license of use of mAG1 was obtained from Medical & Biological Laboratories Co., Ltd.; Venus and SECFP were produced by introduction of genetic mutation based on GFP, by Laboratory for Cell Function Dynamics, Brain Science Institute, RIKEN. [Reference] SECFP, Hadjantonakis et al., BMC Biotechnol., 2:11, 2002.: EGFP, Zhang et al. Biochem. Biophys. Res. Commun., 227: 707-711, 1996.: Venus, Nagai et al., Nat. Botech., 20: 87-90, 2002.: mAGI, Karasawa et al., J. Biol. Chem., 278(36): 34167-34171, 2003.: Baird et al., PNAS., 97(22): 11984-11989, 2000.).

Subsequently, in the same manner as in Comparative Example 1, a clearing treatment using a SCALE-A2 reagent (see Example 2) and a clearing treatment according to the benzylbenzoate/benzylalchol (BABB) method described by Dodt et al. in Non-Patent Literature 2 were performed, and these two treatments were compared with each other.

The result of the observation is shown in Fig. 10. Fig. 10 shows a relative value of a fluorescence intensity from a fluorescent protein after a clearing treatment, with respect to a fluorescence intensity (= 100) from the fluorescent protein before the clearing treatment. As is clear from Fig. 10, in each case, the clearing treatment using the SCALE-A2 reagent (the present invention: see Example 2) maintained 80% or more of the fluorescence intensity from the fluorescent protein. On the other hand, in each case, the clearing treatment according to the BABB method caused a significant reduction in the fluorescence intensity from the fluorescent protein.

### [Example 10: Recovery of Tissue after Clearing Treatment]

From the hippocampuses of a GFP transgenic mouse and a YFP transgenic mouse (GFP-M line and YFP-H line, provided by Professor Josh Sanes of Harvard University, U.S.A.), 2.5 mm-thickness slices were prepared. Then, these slices were subjected to a clearing treatment using a SCALE-A2 reagent (see Example 2) for five days so that the slices were made transparent once. Thereafter, the slices were rinsed with PBS three times so that the tissues in the slices were brought back to a non-transparent state. The slices in the non-transparent state were compared with slices having not been subjected to a clearing treatment using a SCALE-A2 reagent, in terms of immunostaining properties.

The immunostaining was performed as follows: As a primary antibody, (i) mouse-derived anti-polysialilated neural cell adhesion molecule (PSA-NCAM) monoclonal antibody (Millipore Corporation) that recognizes a polysialic acid of PSA-NCAM existing on a surface of an immature neuronal cell and (ii) rabbit-derived anti-glial fibrillary acidic protein (GFAP) polyclonal antibody (Sigma-Aldrich) that recognizes an intermediate filament GFAP specific to astroglia were used, and were caused to react with their respective target proteins in the slices for 24 hours at 4°C. Thereafter, the slices were rinsed with PBS. Then, the anti-PSA-NCAM monoclonal antibody was caused to react with an Alexa Fluor 546-labeled anti-mouse IgM antibody (Invitrogen, Molecular Probes), which was used as a secondary antibody, at room temperature for three hours; and the GFAP polyclonal antibody was caused to react with an Alexa Fluor 633-labeled anti-rabbit IgG antibody (Invitrogen, Molecular Probes), which was used as a secondary antibody, at room temperature for three hours. In this manner, the slices were immunohistochemically stained. Since fluorescence from these slices did not decayed, triple fluorescent (fluorescence including GFP and YFP) stained images were obtained. The observation was performed with a 20-power objective lens (UplanApo20, Olympus Corporation) with use of an inverted confocal laser microscope (FV500, Olympus Corporation).

As shown in Fig. 12, both before ("Before SCALE" in Fig. 12) and after ("After Recovery" in Fig. 12) the treatment using SCALE-A2, (i) immature neurons existing in the dentate gyrus of hippocampus and (ii) mossy fibers extending from the immature neurons to the CA3 region were stained with the anti-PSA-NCAM monoclonal antibody with substantially no problem. Similarly, the astroglia was also stained with the anti-GFAP polyclonal antibody without any problem.

The present invention is not limited to the description of the embodiments and examples above, but may be altered by a skilled person within the scope of the claims. An embodiment based on a proper combination of technical means disclosed in different embodiments is encompassed in the technical scope of the present invention.

### Industrial Applicability

The present invention provides: a novel clearing reagent for making a biological material transparent which clearing reagent contains, as an active component, a component having a higher bio-affinity; and use thereof.

## Claims

1. A clearing reagent for making a biological material transparent, comprising:
as an active component, at least one compound selected from the group consisting of urea and urea derivatives,
the clearing reagent being a solution, and the concentration of said at least one compound being 1M or more and not more than 8.5M, said clearing reagent further contains a surfactant, said surfactant comprises a nonionic surfactant, and the concentration of said surfactant is 0.05 (w/v)% or more and not more than 0.2 (w/v) %

2. The clearing reagent as set forth in claim 1, wherein:
urea is contained as the active component.

3. The clearing reagent as set forth in claim 1 or 2, wherein the clearing reagent is an aqueous solution.

4. The clearing reagent as set forth in claim 1, wherein:
the nonionic surfactant is at least one selected from the group consisting of a fatty acid surfactant, a higher alcohol surfactant, and an alkylphenol surfactant.

5. The clearing reagent as set forth in claims 1-4 further comprising a water-soluble macromolecular compound, wherein:
the water-soluble macromolecular compound is at least one selected from the group consisting of a crosslinked sucrose macromolecular substance, a macromolecular substance obtained by covering colloidal silica with a polyvinyl pyrrolidone film polyethylene glycol, and polyvinyl pyrrolidone.

6. The clearing reagent as set forth in claim 5, wherein: the water-soluble macromolecular compound is contained at a concentration of 2.5(w/v)% or more and not more than 40(w/v)%.

7. The clearing reagent as set forth in any one of claims 5 or 6, further comprising:
at least one selected from the group consisting of glycerol, carboxy vinyl polymer, hydroxypropyl methylcellulose, propylene glycol, and macrogol.

8. Use of a clearing reagent comprising:
as an active component, at least one compound selected from the group consisting of urea and urea derivatives,
the clearing reagent being a solution, and the concentration of said at least one compound being 1M or more and not more than 8.5M said clearing reagent further containing a nonionic surfactant, and said clearing reagent not having permeated into biological material,
for making transparent (i) a tissue or an organ derived from a multicellular animal or (ii) a multicellular animal which is not a human.

9. A biological material comprising a clearing reagent as defined in any of claims 1-7, the clearing reagent having permeated into the biological material in order to make the biological material transparent.

10. A method for making a biological material transparent, the biological material being selected from a tissue, an organ or non-human multicellular animal, the method comprising the step of:
causing a clearing reagent comprising:
as an active component, at least one compound selected from the group consisting of urea and urea derivatives,
the clearing reagent being a solution, and the concentration of said at least one compound being 1M or more and not more than 8.5M said clearing reagent further containing a nonionic surfactant,
to permeate into the biological material which has been isolated, in order that the biological material is made transparent.

11. A method for recovering a biological material having been made transparent by a clearing treatment, comprising the step of:
causing an equilibrium salt solution to permeate into a biological material having been made transparent according to a method as set forth in claim 10, in order that the biological material is brought back to a state that the biological material had before the clearing treatment.

12. A kit for a clearing treatment for making a biological material transparent, comprising:
a clearing reagent as set forth in any one of claims 1 through 7.

13. A method for observing a biological material, comprising the steps of:
(i) making a biological material transparent as defined in claims 10 or 11; and
(ii) observing the biological material with an optical microscope.

## Patentansprüche

1. Klärungsreagenz zum Transparentmachen eines biologischen Materials, das Folgendes umfasst:
als eine aktive Komponente wenigstens eine Verbindung, die aus der Gruppe ausgewählt ist, die aus Harnstoff und Harnstoffderivaten besteht,
wobei das Klärungsreagenz eine Lösung ist und die Konzentration der wenigstens einen Verbindung wenigstens 1M und nicht mehr als 8,5M ist, wobei das Klärungsreagenz ferner ein Tensid enthält, wobei das Tensid ein nichtionisches Tensid umfasst und die Konzentration des Tensids wenigstens 0,05 % (w/v) und nicht mehr als 0,2 % (w/v) beträgt.

2. Klärungsreagenz nach Anspruch 1, wobei:
Harnstoff als die aktive Komponente enthalten ist.

3. Klärungsreagenz nach Anspruch 1 oder 2, wobei das Klärungsreagenz eine wässrige Lösung ist.

4. Klärungsreagenz nach Anspruch 1, wobei:
das nichtionische Tensid wenigstens eines ist, das aus der Gruppe ausgewählt ist, die aus einem Fettsäuretensid, einem mehrwertigen Alkoholtensid, und einem Alkylphenoltensid besteht.

5. Klärungsreagenz nach den Ansprüchen 1-4, das ferner eine wasserlösliche makromolekulare Verbindung umfasst, wobei:
die wasserlösliche makromolekulare Verbindung wenigstens eine ist, die aus der Gruppe ausgewählt ist, die aus einer vernetzten makromolekularen Saccharosesubstanz, einer makromolekularen Substanz, erhalten durch Umschließen von kolloidalem Siliciumdioxid mit einem Polyvinylpyrrolidonfilm, Polyethylenglykol und Polyvinylpyrrolidon besteht.

6. Klärungsreagenz nach Anspruch 5, wobei:
die wasserlösliche makromolekulare Verbindung bei einer Konzentration von wenigstens 2,5 % (w/v) und nicht mehr als 40 % (w/v) enthalten ist.

7. Klärungsreagenz nach einem der Ansprüche 5 oder 6, das ferner umfasst:
wenigstens eines, das aus der Gruppe ausgewählt ist, die aus Glycerin, Carboxyvinylpolymer, Hydroxypropylmethylcellulose, Propylenglykol und Macrogol besteht.

8. Verwendung eines Klärungsreagenz, das Folgendes umfasst:
als eine aktive Komponente wenigstens eine Verbindung, die aus der Gruppe ausgewählt ist, die aus Harnstoff und Harnstoffderivaten besteht,
wobei das Klärungsreagenz eine Lösung ist und die Konzentration der wenigstens einen Verbindung wenigstens 1M und nicht mehr als 8,5M beträgt, wobei das Klärungsreagenz ferner ein nichtionisches Tensid enthält und das Klärungsreagenz biologisches Material nicht durchdrungen hat,
zum Transparentmachen (i) eines Gewebes oder eines Organs, das von einem vielzelligen Tier abstammt, oder (ii) eines vielzelligen Tieres, das kein Mensch ist.

9. Biologisches Material, das ein Klärungsreagenz nach einem der Ansprüche 1-7 umfasst, wobei das Klärungsreagenz das biologische Material durchdrungen hat, um das biologische Material transparent zu machen.

10. Verfahren zum Transparentmachen eines biologischen Materials, wobei das biologische Material aus einem Gewebe, einem Organ oder einem nichtmenschlichen vielzelligen Tier ausgewählt ist, wobei das Verfahren den folgenden Schritt umfasst:
Bewirken, dass ein Klärungsreagenz, das Folgendes umfasst:
als eine aktive Komponente wenigstens eine Verbindung, die aus der Gruppe ausgewählt ist, die aus Harnstoff und Harnstoffderivaten besteht,
wobei das Klärungsreagenz eine Lösung ist und die Konzentration der wenigstens einen Verbindung wenigstens 1M und nicht mehr als 8,5M ist, wobei das Klärungsreagenz ferner ein nichtionisches Tensid enthält,
in das biologische Material eindringt, das isoliert wurde, um das biologische Material transparent zu machen.

11. Verfahren zum Rückgewinnen eines biologischen Materials, das durch eine Klärungsbehandlung transparent gemacht wurde, das den folgenden Schritt umfasst:
Bewirken, dass eine Gleichgewichtssalzlösung ein biologisches Material durchdringt, das gemäß einem Verfahren nach Anspruch 10 transparent gemacht wurde, damit das biologische Material in einen Zustand zurückgebracht wird, den das biologische Material vor der Klärungsbehandlung aufwies.

12. Set für eine Klärungsbehandlung zum Transparentmachen eines biologischen Materials, das Folgendes umfasst:
ein Klärungsreagenz nach einem der Ansprüche 1 bis 7.

13. Verfahren zum Beobachten eines biologischen Materials, das die folgenden Schritte umfasst:
(i) Transparentmachen eines biologischen Materials gemäß den Ansprüchen 10 oder 11; und
(ii) Beobachten des biologischen Materials mit einem optischen Mikroskop.

## Revendications

1. Réactif de clarification destiné à rendre transparent un matériau biologique, comprenant :
- comme composant actif, au moins un composé choisi dans le groupe constitué d'urée et des dérivés d'urée,
le réactif de clarification étant une solution, et la concentration dudit au moins un composé étant de 1M ou plus et pas plus de 8,5M, ledit réactif de clarification contenant en outre un tensioactif, ledit tensioactif comprenant un tensioactif non ionique, et la concentration dudit tensioactif étant de 0,05 (p/v) % ou plus et pas plus de 0,2 (p/v) %

2. Réactif de clarification selon la revendication 1, dans lequel :
- l'urée est contenue en tant que composant actif.

3. Réactif de clarification selon la revendication 1 ou 2, dans lequel le réactif de clarification est une solution aqueuse.

4. Réactif de clarification selon la revendication 1, dans lequel :
- le tensioactif non ionique est au moins un tensioactif choisi dans le groupe constitué par un tensioactif d'acide gras, un tensioactif d'alcool supérieur et un tensioactif d'alkyl-phénol.

5. Réactif de clarification selon les revendications 1 à 4, comprenant en outre un composé macromoléculaire hydrosoluble, dans lequel :
- le composé macromoléculaire hydrosoluble est au moins un composé choisi dans le groupe constitué d'une substance macromoléculaire de saccharose réticulée, d'une substance macromoléculaire obtenue en recouvrant de la silice sublimée avec un film de polyvinyle pyrrolidone polyéthylène glycol et d'un polyvinyle pyrrolidone.

6. Réactif de clarification selon la revendication 5, dans lequel :
- le composé macromoléculaire hydrosoluble est contenu à une concentration de 2,5 (p/v) % ou plus et pas plus de 40 (p/v) %.

7. Réactif de clarification selon l'une quelconque des revendications 5 ou 6, comprenant en outre :
- au moins un élément choisi dans le groupe constitué du glycérol, du carboxypolyméthylène, de l'hydroxypropylméthylcellulose, du propylèneglycol et du macrogol.

8. Utilisation d'un réactif de clarification comprenant :
- en tant que composant actif, au moins un composé choisi dans le groupe constitué d'urée et de dérivés d'urée,
le réactif de clarification étant une solution, et la concentration dudit au moins un composé étant de 1M ou plus et pas plus de 8,5M, ledit réactif de clarification en outre contenant un tensioactif non ionique, et ledit réactif de clarification n'ayant pas infiltré le matériau biologique,
pour rendre transparent (i) un tissu ou un organe dérivé d'un animal multicellulaire ou (ii) d'un animal multicellulaire qui n'est pas un humain.

9. Matériau biologique comprenant un réactif de clarification selon l'une quelconque des revendications 1 à 7, le réactif de clarification ayant infiltré le matériau biologique afin de rendre le matériau biologique transparent.

10. Procédé destiné à rendre transparent un matériau biologique, le matériau biologique étant choisi parmi un tissu, un organe ou un animal multicellulaire non humain, le procédé comprenant l'étape consistant à :
- entraîner un réactif de clarification comprenant :
- en tant que composant actif, au moins un composé choisi dans le groupe constitué d'urée et des dérivés d'urée,
le réactif de clarification étant une solution, et la concentration dudit au moins un composé étant de 1M ou plus et pas plus de 8,5M, ledit réactif de clarification en outre contenant un tensioactif non ionique,
pour infiltrer le matériau biologique qui a été isolé, afin que le matériau biologique soit rendue transparent.

11. Procédé de récupération d'un matériau biologique rendu transparent par un traitement de clarification, comprenant l'étape consistant à :
- entraîner une solution saline équilibrée à infiltrer un matériau biologique ayant été rendu transparent selon un procédé selon la revendication 10, afin de ramener le matériau biologique à l'état dans lequel le matériau biologique se trouvait avant le traitement de clarification.

12. Réactif de clarification destiné à rendre transparent un matériau biologique, comprenant :
- un réactif de clarification selon l'une quelconque des revendications 1 à 7.

13. Procédé d'observation d'un matériau biologique, comprenant les étapes consistant à :
(i) rendre un matériau biologique transparent selon les revendications 10 ou 11 ; et
(ii) observer le matériau biologique au moyen d'un microscope optique.
